# EUROPEAN PATENT SPECIFICATION

(11) **EP 3 303 721 B1**
(45) Date of publication and mention of the grant of the patent: **23.01.2019**
(21) Application number: 16729224.2
(22) Date of filing: 06.06.2016
(51) Int. Cl.: E04C 2/04, B28B 3/00, C04B 33/04, C04B 35/19

(54) **REDUCING INTERNAL STRESSES IN CERAMIC MATERIALS**
REDUZIERUNG VON EIGENSPANNUNGEN IN KERAMISCHEN WERKSTOFFEN
RÉDUCTION DES CONTRAINTES INTERNES DES MATÉRIAUX CÉRAMIQUES

(30) Priority: 05.06.2015 ES 201530796
(43) Date of publication of application: 11.04.2018
(73) Proprietor: Cosentino Research & Development, S.L., 04850 Cantoria, Almeria (ES)
(72) Inventor: BENITO LÓPEZ, José Manuel, 04850 Cantoria Almería (ES)
(74) Representative: ABG Intellectual Property, S.L.
(86) International application number: PCT/EP2016/062805
(87) International publication number: WO 2016/193501

(56) References cited:
- EP-A1- 2 889 437
- ZANELLI C ET AL: "The vitreous phase of porcelain stoneware: Composition, evolution during sintering and physical properties", JOURNAL OF NON-CRYSTALLINE SOLIDS, vol. 357, no. 16, 7 June 2011 (2011-06-07) , pages 3251-3260, XP028231576, ISSN: 0022-3093, DOI: 10.1016/J.JNONCRYSOL.2011.05.020 [retrieved on 2011-05-27]
- MATTEUCCI F ET AL: "Effect of soda-lime glass on sintering and technological properties of porcelain stoneware tiles", CERAMICS INTERNATIONAL, ELSEVIER, AMSTERDAM, NL, vol. 28, no. 8, 1 January 2002 (2002-01-01), pages 873-880, XP004388716, ISSN: 0272-8842, DOI: 10.1016/S0272-8842(02)00067-6
- ESPOSITO L ET AL: "The use of nepheline-syenite in a body mix for porcelain stoneware tiles", CERAMICS INTERNATIONAL, ELSEVIER, AMSTERDAM, NL, vol. 31, no. 2, 1 January 2005 (2005-01-01), pages 233-240, XP027796065, ISSN: 0272-8842 [retrieved on 2005-01-01]
- DE NONI A ET AL: "Effect of quartz particle size on the mechanical behaviour of porcelain tile subjected to different cooling rates", JOURNAL OF THE EUROPEAN CERAMIC SOCIETY, ELSEVIER SCIENCE PUBLISHERS, BARKING, ESSEX, GB, vol. 29, no. 6, 1 April 2009 (2009-04-01), pages 1039-1046, XP025939712, ISSN: 0955-2219, DOI: 10.1016/J.JEURCERAMSOC.2008.07.052 [retrieved on 2008-09-27]

## Description

### Field of the Invention

The present invention belongs to the technical field of compacted ceramic materials for use as building materials in coverings and floors.

### Background of the Invention

The firing step is one of the most important steps of the process of manufacturing ceramic materials. During the firing step, the ceramic materials acquire the final mechanical properties and aesthetic characteristics of the product.

In the methods used in the state of the art, the firing step is performed following a temperature cycle in which the materials are heated until reaching a temperature comprised between 1,100°C and 1,200°C, followed by rapid cooling. Said cooling only slows down when reaching 573°C, at which point a change in volume is known to occur due to the allotropic transformation of quartz from the alpha phase to the beta phase, which could give rise to fracturing of the material due to the generation of stresses.

The internal stresses produced during the firing cycle of ceramic materials can essentially be attributed to differences between the coefficient of expansion of the crystalline phase and the glassy phase of the ceramic material, and to the difference in the rates of cooling between the surface and the interior of the product. During the cooling of the firing cycle, the temperature gradient generated in the thickness of the piece causes the modification of the dimensions of the crystalline phase and the glassy phase according to the coefficient of expansion thereof, causing internal stresses in the resulting ceramic material.

In the case of manufacturing ceramic slabs having large dimensions and small thicknesses, internal stresses can even cause the material to break during the firing cycle. Furthermore, when the pieces that withstand the firing cycle are subjected to drilling or cutting processes, the stresses become evident through the occurrence of cracks in the material.

Peter W. Olupot et al. (World Academy of Science, Engineering and Technology, 2013, vol. 7, p. 332-338) disclose that some of the approaches developed to reduce stresses in ceramic products seek to reduce or even replace the quartz content in the composition with other components, such as ash or alumina. Peter W. Olupot *et al.* show the results obtained by modifying the firing cycle in a sample of ceramic material with a height of 65 mm and width of 76 mm and with a particular design. The authors did not observe changes in the mechanical properties of the materials which were kept at the maximum temperature in the firing cycle from 1 h to 3 h. However, mechanical resistance decreases when the ceramic material is kept at the maximum temperature for 30 minutes.

A. De Noni Junior *et al.* (A. de Noni et al., Bol. Soc. Ceram. V., 46, 4, 163-170 (2007)) disclose the effect of cooling on ceramic test pieces measuring 80x20x7 mm obtained by pressing an industrial spray-dried powder. In the firing cycle, the test pieces are heated at 70°C/min between 25-500°C, and 25°C/min between 500°C and 1,190°C. The document shows the results obtained when varying the rate of cooling of the firing process from 1,190°C to 650±20°C and in the zone around the allotropic transformation of quartz (<650°C). The document mentions that by increasing the rate of cooling, the number of residual stresses in the material increases and the mechanical resistance of the ceramic material also improve. However, the thermal gradients between the surface and the interior of the piece during the allotropic transformation of quartz cause a microstructural deterioration of the piece which counteracts the increase in mechanical resistance.

There is therefore a need in the state of the art for a compacted ceramic material with excellent mechanical features and a low level of internal stresses which can be machined into pieces having large dimensions.

### Object of the Invention

The present invention provides a compacted ceramic material with high mechanical resistance, where the internal stresses generated within the material during the firing process have been minimized. The ceramic material of the present invention can be used for manufacturing slabs having large dimensions. Due to their excellent properties, the compacted ceramic materials of the present invention can be used as building materials in coverings, floorings or for manufacturing kitchen countertops.

In a first aspect, the present invention relates to a method for manufacturing a compacted ceramic material according to claim 1.

In another aspect, the invention relates to the compacted ceramic material obtainable by the method of claim 1.

Likewise, an additional aspect of the present invention relates to the use of the compacted ceramic material as a building material, as well as the use thereof in façades and coverings.

### Detailed Description of the Invention

The present invention relates to a compacted ceramic material comprising between 45-85% by weight of glassy phase, characterized in that it has a density comprised between 2.3 and 3.0 g/cm³.

In the context of the present invention, "ceramic material" is understood to mean that material consisting of inorganic, polycrystalline, non-metallic compounds, the fundamental characteristic of which is that they are consolidated in solid state by means of high-temperature heat treatments (firing) and are formed by a combination of crystalline and glassy phases. The inorganic compounds are formed by metallic and non-metallic elements bound by ionic or covalent bonds.

In the context of the present invention, the term "ceramic material" or "compacted ceramic material" or "ultra-compacted ceramic material" refers to ceramic materials that have been compacted at pressures exceeding 400 kg/cm².

The ceramic materials of the present invention may be obtained from very pure raw materials, in the form of micronized particles, and by means of high shaping pressures and consolidated in solid state at high sintering temperatures. The compacted ceramic materials of the present invention, with a glassy phase comprised between 45%-85% by weight, are almost completely densified bodies, with virtually no internal pores, cracks and flaws, giving them excellent technical features: high mechanical, thermal, abrasion and chemical etching resistances.

In the context of the present invention, the term "micronized particles" refers to particles having a micrometric size in their three dimensions. In particular, the micronized particles have sizes comprised between 1 micrometer and 500 micrometers.

In a particular embodiment of the invention, the mineral particles used in manufacturing the ceramic materials of the invention have a particle size of less than 200 micrometers, preferably less than 100 micrometers, a size in the order of tens of microns, between 10-90 micrometers, is particularly preferred. More preferably, a particle size between 10 and 50 micrometers is used. The provided particle size refers to the mean statistical size thereof. Sieves of different sizes are used to select the particle size. Preferably, at least 95% of the particles of the materials used to prepare the ceramic material of the invention go through a 45 µm sieve, more preferably at least 98% of the particles of the materials used to prepare the ceramic material of the invention go through a 45 µm sieve.

These particles are preferably obtained by wet grinding the starting raw materials and spray drying, which techniques are known in the field of ceramics.

In an embodiment of the invention, the composition by weight of the starting materials comprises:
- Clays: 0-35% by weight
- Kaolins: 0-40% by weight
- Feldspars: 10-70% by weight.

In one preferred embodiment, the composition by weight of the starting materials comprises:
- Clays: 10-35% by weight
- Kaolins: 5-30% by weight
- Feldspars: 20-70% by weight

In one more preferred embodiment, the composition by weight of the starting materials comprises:
- Clays: 20-35% by weight
- Kaolins: 5-15% by weight
- Feldspars: 50-70% by weight, preferably with a particle size of less than 40 µm.
The composition of starting materials may further contain other glassy materials such as frits.

According to the present invention, the term "clays" may refer to clay, shales, and other natural or synthetic brickmaking material. The clays provide plasticity for shaping the starting product. Since they are mixtures of minerals that usually have particle sizes in the range of tens of micrometers, they generally do not have to be subjected to an intensive grinding process, which allows maintaining the plastic properties of the clay. In the context of the present invention, the clays used have a high plasticity so as to allow correct shaping of the overall mixture. In particular, the clays of the composition counteract the effect of the feldspar content hindering the pressing step.

Clays according to the present invention are principally selected from hydrosilicates of alumina and may include clay minerals such as smectites (such as montmorillonite, nontronice, sapolite, and the like), kaolins (such as kaolinite, dickite, halloysite, nacrite, and the like), illites (such as illite, clay-micas and the like), chlorites (such as clinochlore, chamosite, nimite, pennantite, and the like), attapulgites, sepiolites, and the like. Further, clays may also contain minerals such as quartz, sylvine or siderite in its composition along with other various trace components.

In a particular embodiment, the clays comprise montmorillonite, illite and kaolinite. Preferably, the clays comprise at least 60% by weight of montmorillonite, illite and kaolinite based on the total weight of the clays. More preferably, at least 65% or at least 70% by weight.

In one embodiment, the composition of the starting materials comprises between 0 and 35% by weight of clays, preferably between 10 and 35%, more preferably between 20 and 35% by weight of clays.

The term "kaolins" refers to a clay containing the mineral kaolinite as its principal constituent. Preferably, kaolinite is the only plastic component in kaolins. Kaolins may further contain other impurities, such as quartz, mica, phosphates, fine clay impurities such as certain smectite clay constituents and various other species, e.g. compounds containing transition elements such as iron.

In a particular embodiment, kaolins comprise at least 60% by weight of kaolinite based on the total weight of kaolins.

In one embodiment, the composition of the starting materials comprises between 0 and 40% by weight of kaolins, preferably between 5 and 30% of kaolins, more preferably between 5 and 20% of kaolins, even more preferably between 5 and 15% by weight of kaolins.

In another embodiment of the invention, the feldspars give special properties to the ceramic material of the invention. In particular, the feldspars act as melting materials in the firing process and reduce porosity in the final material.

In the present invention, the size of the feldspar particles may be reduced by micronizing to tens of microns. By reducing the size of the feldspar particles, the specific surface, and therefore the reactivity of said particles, increases. As a result of this effect, bridges are generated between particles resulting in a compacted material where the pores are isolated from others, generating a closed porosity throughout the entire volume. Furthermore, the increase in the reactivity of the particles allows reducing the firing temperature from 1180°C to 1140°C, preventing pyroplastic deformation.

In the context of the present invention, the feldspars represent between 10% and 70% by weight of the materials, preferably between 20 and 70% by weight, preferably between 50 and 70% by weight, more preferably 55-60% by weight of the materials. Preferably, the feldspars of the composition contain between 15 and 25% by weight of potassium feldspar out of the total raw materials, and between 35-45% by weight of sodium feldspar out of the total raw materials.

Preferably, at least 95%, more preferably at least 99%, even more preferably at least 99.7% of the feldspar particles have a size less than or equal to 40 µm.

Sodium feldspar acts as a lower viscosity melting materials, quickly creating bridges for binding particles together. Furthermore, the small size of the particles and of feldspar itself favors the binding between particles, reducing the internal porosity of the material and resulting in an increase in the density of the material during the sintering process.

Potassium feldspar provides greater viscosity to the melting materials, which helps maintain the stability and shape of the product during the firing process.

Preferably the starting materials have a high purity which allows precise control of the compositions and prevents flaws in the material. For example, an undetermined organic matter content can cause the occurrence of considerable pores and flaws during firing due to combustion thereof. The presence of unwanted mineral materials can affect glassy phase formation, bringing about internal stresses or issues of planarity or generation of residual porosity.

In a particular embodiment, the purity of the selected materials exceeds 90%. In a preferred embodiment, the feldspars of the composition have a purity exceeding 90% by weight.

The starting materials can have different compositions, although there is preferably an amount of non-siliceous melting materials that allow obtaining 45-85% of glassy phase.

In the present invention, "glassy phase" is understood to mean the amorphous, non-crystalline phase, between the crystalline phase grains. The percentage by weight of glassy phase is determined by means of the usual methods in the field of ceramics. In particular, the percentage by weight of glassy phase can be determined by x-ray diffraction.

In a particular embodiment of the present invention, the compacted ceramic material of the present invention comprises between 45 and 85% by weight of glassy phase with respect to the total weight of the compacted ceramic material, preferably between 45 and 75% by weight of glassy phase, more preferably between 50% and 70% by weight of glassy phase. In a preferred embodiment, the glassy phase content is 60% by weight with respect to the total weight of the compacted ceramic material.

In the context of the present invention, the glassy phase of the compacted ceramic material having a low viscosity during the firing step, closes the internal pores of the material upon solidification.

The compacted ceramic material provided by the present invention has a density comprised between 2.3 and 3.0 g/cm³, preferably between 2.4 and 2.7 g/cm³. More preferably, the compacted ceramic material has a density of 2.6 g/cm³. The density measurements provided in the present invention have been taken by immersion in water applying Archimedes' principle. Density has been determined at room temperature.

In a particular embodiment, the compacted ceramic material has lateral dimensions of up to 4 x 2 m², preferably of up to 3.20 x 1.44 m², more preferably comprised between 3 x 1 m² and 4 x 2 m². In a preferred embodiment, the compacted ceramic material has lateral dimensions of 3.20 x 1.44 m².

Preferably the compacted ceramic material is in the form of a slab with lateral dimensions of 3.20 x 1.44 m².

In another particular embodiment, the compacted ceramic material has a thickness of at least 0.7 cm, preferably of at least 1 cm, more preferably 2 cm or 3 cm. Preferably, it has a thickness between 0.7 and 3 cm. Preferably, the compacted ceramic material has lateral dimensions of up to 4 x 2 m² and a thickness of at least 0.7 cm. More preferably, the compacted ceramic material has lateral dimensions of at least 3 meters in length and 1.4, preferably 1.5, in width or of 3.20 x 1.44 m² and a thickness of at least 0.7 cm, preferably of at least 1 cm, preferably at least 2 cm, more preferably at least 3 cm.

Preferably the compacted ceramic material is in the form of a slab with lateral dimensions of 3.20 x 1.44 m² and a thickness between 0.7 and 3 cm, preferably of about 2 or 3 cm.

In a particular embodiment, the compacted ceramic material has a porosity less than 4% by volume. Preferably, the compacted ceramic material of the invention has a porosity comprised between 1 and 3% by volume. More preferably, the compacted ceramic material of the invention has a porosity of 2% by volume.

"Porosity" is understood to mean the empty space within the ceramic material and is expressed in % by volume. The methods of measuring porosity in ceramic materials are known by the person skilled in the art. Among said methods, the following are included: mercury porosimetry, porosity measurements in an autoclave based on impregnating with water or by immersion simply using Archimedes' principle. The porosity measurements provided in the present invention have been taken by means of an autoclave. Porosity has been determined at room temperature. In an embodiment, it refers to the porosity measured at room temperature and a pressure of 600 mmHg.

Likewise, the present invention provides a method for manufacturing the compacted ceramic material.

Once the starting materials are selected and reduced to the desired size, they can be stored in order to be used at the appropriate time. Preferably, the different materials are uniformly mixed, and to a suitable moisture content that allows shaping and pressing prior to firing.

Preferably the material is mixed with water, or dried if it was obtained through a wet process, so that the amount of water is between 4%-12% by weight, preferably between 4%-9% by weight, more preferably between 6% and 9%.

After preparing the mixture of particles forming the raw material, in an embodiment of the invention the method includes a compacting step using a continuous pressing station, comprising compacting means in the form of a compacting roller and belt. In a particular embodiment, the mixture of particles of raw materials are compacted at a pressure of between 30 and 110 kg/cm², preferably between 40 and 100 kg/cm², more preferably between 60 and 80 kg/cm². If required, the product is cut into the desired shape after compacting, for example in the form of a rectangular slab.

After compacting, and optionally cutting, the method includes a pressing step carried out at very high pressures, which generates ultra-compacting of the material prior to firing. This step contributes to reducing the porosity in the end product and makes the sintering process easier. In this pressing step pressures can exceed 400 kg/cm², preferably exceeding 450 kg/cm², and more preferably exceeding 500 kg/cm². In a particular embodiment, the pressure is comprised between 400 and 450 kg/cm², more preferably between 410 and 440 kg/cm², even more preferably between 410 and 430 Kg/cm².

Once the product is shaped and the materials ultra-compacted, a drying step may be carried out to reduce the water content without deforming the piece.

Before drying, the product may have a water content of up to 10% by weight. Drying reduces the water content, so that the final content of water in the product is of up to 0.7% by weight, preferably of up to 0.5% by weight, more preferably of up to 0.3 % by weight. The drying step can be done in a specific installation, which allows storing the dried pieces before firing them, making it easier to manage the pieces in stock. Alternatively, drying can be done in the firing kiln, as a step immediately prior to firing.

In the context of the present invention, the firing of the ceramic material is performed by applying a firing cycle. The firing cycle comprises heating the ceramic material to a certain temperature and subsequent cooling.

Preferably in the firing cycle, the ceramic material is heated to maximum temperatures comprised between 1000°C and 1210°C, more preferably between 1000°C and 1200°C, more preferably between 1100°C and 1180°C, even more preferably between 1120°C and 1160°C. In a particular embodiment, the maximum temperature reached in the firing cycle is comprised between 1180°C and 1210°C. Melting and sintering of the particles occur at these temperatures, but deformation of the pieces, for example due to the action of gravity, is prevented. Preferably, the time at the maximum firing temperature is comprised between 7 and 25 min.

During the firing and sintering step, a viscous liquid phase is generated that contributes to reducing porosity when firing the product of the invention. The formation of a viscous glassy phase which surrounds the most refractory particles, and under forces of the surface tension created by the fine pores of the piece, tends to bring the particles closer to one another, increasing shrinkage and reducing the porosity of the product, takes place during heating in the firing cycle. The high density of the starting product resulting from the ultra-compaction process and the selection of the particle size (preferably between 10 and 50 µm) give the product specific characteristics which make the glassification and sintering process faster.

In a particular embodiment, the firing cycle to which the material is subjected (including heating the material, residence time at the maximum temperature and cooling) has a duration of up to 9 hours. Preferably, the firing cycle has a duration between 1 and 9 hours. In particular, for thicknesses comprised between 8-30 mm the cycle lasts between 90 and 500 min, preferably between 100 and 500 min and achieves a maximum temperature comprised between 1170-1200°C.

Therefore, the present invention relates to the method for manufacturing the compacted ceramic material comprising a firing cycle where the rate of cooling from the maximum temperature reached to 700°C is comprised between 3 and 42°C/min, preferably between 4°C/min and 41°C/min, more preferably between 5°C/min and 41°C/min, even more preferably between 5°C/min and 40°C/min. In an embodiment, the rate of cooling from the maximum temperature reached to 700°C is between 5°C/min and 41°C/min. In particular, for smaller thicknesses, the rate of cooling applied is slower.

The authors of the present invention have found that when the rate of cooling from the maximum temperature achieved until 700°C is reduced compared to conventional methods, the compacted ceramic materials obtained from the firing cycle have better mechanical properties, particularly better mechanical resistance. Without being bound by any theory, it is believed that when the rate of cooling is slower, the particles rearrange themselves, reducing the internal stresses brought about. The resulting product has greater stability, allowing subsequent machining of the piece and preventing the occurrence of cracks or fracturing of the material.

It has been also observed that this effect is independent of the rate of heating until the maximum temperature is reached and of the rate of cooling below 700°C.

The method for manufacturing the compacted ceramic material further comprises a refiring step at a temperature comprised between 600°C and 800°C, preferably at a temperature comprised between 650 and 800°C, even more preferably at 750°C. The refiring step favors the release of internal residual stresses within the material. The compacted ceramic material is maintained at the maximum temperature achieved in the refiring step from 15 to 30 minutes, preferably from 20 to 25 minutes. In a preferred embodiment, the whole refiring step has a total duration of between 3 and 6 hours, preferably about 4 hours.

In a particular embodiment, the method for manufacturing the compacted ceramic material further comprises a three-step grinding phase. The three-step grinding phase allows obtaining a homogenous particle size. In a preferred embodiment the maximum reject in a sieve of 63 µm is lower than 1%.

The method of manufacturing the ceramic material of the invention can include additional conventional steps, such as, for example the addition of coloring substances, for example after the grinding step, the formation of decorative streaks using mineral powders of different colors, elimination of metallic particles, etc.

The product of the invention has unique mechanical properties allowing it to be manufactured in large sized pieces, even exceeding 3 meters in length and 1.5 meters in width, and with a thickness that can reach up to 3 cm or more if required.

These properties mean that the compacted ceramic materials of the invention are excellent for use thereof as a building material. The high chemical and physical resistance, and the large manufacturing dimensions allow the use thereof in the covering of floors and façades, where they are inert to the action of solar radiation, chemical agents, have a high degree of hardness and controlled internal stress level allowing the pieces to be cut and handled without breaking.

A particularly preferred application for the ceramic materials of the invention is kitchen countertops. The high chemical resistance and hardness thereof allow contact with food, food colorants, and drinks such as wine or coffee without generating stains and without affecting the properties thereof. Furthermore, the possibility of manufacturing thicknesses of 3 cm or more gives the countertop an appearance similar to that of natural stones.

The invention is illustrated below by means of examples, which must not be interpreted as being limiting of the invention, which is defined by the claims.

### Reference examples

### Example 1

The following starting materials and amounts by weight were used in the following example:
- 30% clay (comprising at least 60wt% of montmorillonite, illite and kaolinite and wherein the reject at a 125 µm sieve is about 4.5%),
- 15% kaolin (comprising at least 60wt% of kaolinite and wherein the reject at a 53 µm sieve is less than 1%),
- 38% sodium feldspar (wherein the particles have an average size of less than 300 µm, and the content of sodium is of at least 10% by weight),
- 17% potassium feldspar (wherein 75% of the particles have an average size of less than 100 µm, and the content of potassium is of at least 14% by weight),

All the starting materials have a purity exceeding 90%.

The size of the feldspathic materials and the remaining materials was reduced by means of grinding until achieving that over 95% of the particles have a particle size below 45 µm.

Spray drying was then performed until achieving a product with a water content of 8% by weight.

The wet material was subjected to shaping and ultra-pressing at 450 kg/cm² until reaching a thickness of 30 mm.

It was then dried by means of heat in a drying line until achieving a product with a water content of 0.5% by weight.

The dry product was subjected to a firing cycle of 500 min reaching a maximum temperature of 1,200°C.

The applied rate of cooling from the maximum temperature to 700°C was of about 5°C/min.

The resulting product has a density comprised between 2.4-2.7 g/cm³ measured by immersion in water applying Archimedes' principle at room temperature and 79 % by weight of glassy phase (dimensions: 3 cm thickness, 3.2 meters in length and 1.44 in width).

### Example 2

The following starting materials and amounts by weight were used in the following example:
- 27% clay (comprising at least 60wt% of montmorillonite, illite and kaolinite and wherein the reject at a 125 µm sieve is about 4.5%),
- 8% kaolin (comprising at least 60wt% of kaolinite and wherein the reject at a 53 µm sieve is less than 1%),
- 45% sodium feldspar (wherein the particles have an average size of less than 300 µm, and the content of sodium is of at least 10% by weight),
- 20% potassium feldspar (wherein 75% of the particles have an average size of less than 100 µm, and the content of potassium is of at least 14% by weight),

All the starting materials have a purity exceeding 90%.

The size of the feldspathic materials and the remaining materials was reduced by means of grinding until achieving that over 95% of the particles have a particle size below 45 µm.

Spray drying was then performed until achieving a product with a water content of 8% by weight.

The wet material was subjected to shaping and ultra-pressing at 450 kg/cm² until reaching a thickness of 8 mm.

It was then dried by means of heat in a drying line until achieving a product with a water content of 0.5% by weight.

The dry product was subjected to a firing cycle of 500 min reaching a maximum temperature of 1,185°C.

The applied rate of cooling from the maximum temperature to 700°C was of 35°C/min.

The resulting product has a density comprised between 2.4-2.7 g/cm³ measured by immersion in water applying Archimedes' principle at room temperature and 79 % by weight of glassy phase (dimensions: 0.8 cm thickness, 3.2 meters in length and 1.44 in width).

### Example 3

Following a similar process as in examples 1 and 2 but applying a cooling rate of 45°C/min from the maximum temperature to 700°C, the resulting product was tensioned and even broke during subsequent cutting and preform steps.

## Claims

1. A method for manufacturing a compacted ceramic material comprising between 45-85% by weight of glassy phase and having a density comprised between 2.3 and 3.0 g/cm³, the method comprising a firing cycle where the rate of cooling from the maximum temperature reached to 700°C is comprised between 3 and 42°C/min and a further refiring step at a temperature between 600 and 800°C, wherein the compacted ceramic material is maintained at the maximum temperature achieved in the refiring step from 15 to 30 minutes.

2. The method for manufacturing the compacted ceramic material according to claim 1, wherein the rate of cooling from the maximum temperature reached to 700°C is comprised between 5 and 41°C/min

3. The method for manufacturing the compacted ceramic material according to claim 1 or 2, where the maximum temperature reached in the firing cycle is comprised between 1180°C and 1210°C.

4. The method for manufacturing the compacted ceramic material according to any one of claims 1 to 3, where the firing cycle to which the material is subjected has a duration of up to 9 hours.

5. The method for manufacturing the compacted ceramic material according to any one of claims 1, 2 or 4, comprising:
a) grinding the raw materials to reduce them to a particle size of less than 100 microns,
b) shaping and compacting the raw materials at pressures exceeding 400 kg/cm², and
c) firing at a maximum temperature comprised between 1000 and 1200°C.

6. The method for manufacturing the compacted ceramic material according to any one of claims 1 to 5, wherein the time at the maximum firing temperature is comprised between 7 and 25 minutes.

7. The method for manufacturing the compacted ceramic material according to any one of claims 1 to 6, wherein the temperature at the refiring step is 750°C.

8. The method for manufacturing the compacted ceramic material according to any one of claims 1 to 7, wherein the compacted ceramic material has lateral dimensions between 3 x 1 m² and 4 x 2 m².

9. The method for manufacturing the compacted ceramic material according to any one of claims 1 to 8, wherein the compacted ceramic material has a thickness of at least 0.7 cm.

10. A compacted ceramic material obtainable by the method defined in any of claims 1 to 9.

11. Use of the compacted ceramic material according to claim 10 as a building material.

12. A building material comprising a compacted ceramic material according to claim 10.

13. Use of the building material according to claim 12 for covering floors, walls or façades.

14. Use of the building material according to claim 12 for a kitchen countertop.

15. Use according to claim 14, wherein the kitchen countertop has a length exceeding 3 meters, preferably between 3 and 4 meters.

## Patentansprüche

1. Verfahren zur Herstellung eines verdichteten Keramikmaterials, das zwischen 45-85 Gew.-% einer Glasphase umfasst und eine zwischen 2,3 und 3,0 g/cm³ betragende Dichte aufweist, wobei das Verfahren einen Brennzyklus, in dem die Abkühlgeschwindigkeit von der erreichten Höchsttemperatur auf 700 °C zwischen 3 und 42 °C/min beträgt, und einen weiteren Schritt eines nochmaligen Brennens bei einer Temperatur zwischen 600 und 800 °C, wobei das verdichtete Keramikmaterial 15 bis 30 Minuten bei der in dem Schritt des nochmaligen Brennens erreichten Höchsttemperatur gehalten wird, umfasst.

2. Verfahren zur Herstellung des verdichteten Keramikmaterials nach Anspruch 1, wobei die Abkühlgeschwindigkeit von der erreichten Höchsttemperatur auf 700 °C zwischen 5 und 41 °C/min beträgt.

3. Verfahren zur Herstellung des verdichteten Keramikmaterials nach Anspruch 1 oder 2, in dem die in dem Brennzyklus erreichte Höchsttemperatur zwischen 1180 °C und 1210 °C beträgt.

4. Verfahren zur Herstellung des verdichteten Keramikmaterials nach einem der Ansprüche 1 bis 3, in dem der Brennzyklus, dem das Material unterzogen wird, eine Dauer von bis zu 9 Stunden aufweist.

5. Verfahren zur Herstellung des verdichteten Keramikmaterials nach einem der Ansprüche 1, 2 oder 4, umfassend:
a) Mahlen der Rohmaterialien, um sie auf eine Partikelgröße von weniger als 100 Mikrometer zu zerkleinern,
b) Formen und Verdichten der Rohmaterialien bei Drücken über 400 kg/cm² und
c) Brennen bei einer Höchsttemperatur, die zwischen 1000 und 1200 °C beträgt.

6. Verfahren zur Herstellung des verdichteten Keramikmaterials nach einem der Ansprüche 1 bis 5, wobei die Zeit bei der höchsten Brenntemperatur zwischen 7 und 25 Minuten beträgt.

7. Verfahren zur Herstellung des verdichteten Keramikmaterials nach einem der Ansprüche 1 bis 6, wobei die Temperatur bei dem Schritt des nochmaligen Brennens 750 °C beträgt.

8. Verfahren zur Herstellung des verdichteten Keramikmaterials nach einem der Ansprüche 1 bis 7, wobei das verdichtete Keramikmaterial seitliche Abmessungen zwischen 3 x 1 m² und 4 x 2 m² aufweist.

9. Verfahren zur Herstellung des verdichteten Keramikmaterials nach einem der Ansprüche 1 bis 8, wobei das verdichtete Keramikmaterial eine Dicke von wenigstens 0,7 cm aufweist.

10. Verdichtetes Keramikmaterial, das mit dem in einem der Ansprüche 1 bis 9 definierten Verfahren erhältlich ist.

11. Verwendung des verdichteten Keramikmaterials nach Anspruch 10 als Baumaterial.

12. Baumaterial, das ein verdichtetes Keramikmaterial nach Anspruch 10 umfasst.

13. Verwendung des Baumaterials nach Anspruch 12 zum Verkleiden von Fußböden, Wänden oder Fassaden.

14. Verwendung des Baumaterials nach Anspruch 12 für eine Küchenarbeitsplatte.

15. Verwendung nach Anspruch 14, wobei die Küchenarbeitsplatte eine Länge über 3 Meter, vorzugsweise zwischen 3 und 4 Metern, aufweist.

## Revendications

1. Un procédé pour la fabrication d'un matériau céramique compacté comprenant entre 45 et 85 % en poids de phase vitreuse et ayant une densité comprise entre 2,3 et 3,0 g/cm³, le procédé comprenant un cycle de cuisson dans lequel la vitesse de refroidissement depuis la température maximale atteinte jusqu'à 700°C est comprise entre 3 et 42°C/min et une étape supplémentaire de recuisson à une température comprise entre 600 et 800°C, le matériau céramique compacté étant maintenu à la température maximale atteinte au cours de l'étape de recuisson entre 15 et 30 minutes.

2. Le procédé pour la fabrication du matériau céramique compacté selon la revendication 1, dans lequel la vitesse de refroidissement depuis la température maximale atteinte jusqu'à 700°C est comprise entre 5 et 41°C/min.

3. Le procédé pour la fabrication du matériau compacté selon la revendication 1 ou la revendication 2, dans lequel la température maximale atteinte dans le cycle de cuisson étant comprise entre 1180°C et 1210°C.

4. Le procédé pour la fabrication du matériau céramique compacté selon l'une quelconque des revendications 1 à 3, dans lequel le cycle de cuisson auquel le matériau est soumis a une durée pouvant atteindre 9 heures.

5. Le procédé pour la fabrication du matériau céramique compacté selon l'une quelconque des revendications 1, 2 ou 4, comprenant :
a) le fait de broyer les matières premières pour les réduire à une granulométrie inférieure à 100 microns,
b) le fait de façonner et compacter les matières premières à des pressions supérieures à 400 kg/cm², et
c) le fait de cuire à une température maximale comprise entre 1000 et 1200°C

6. Le procédé pour la fabrication du matériau céramique compacté selon l'une quelconque des revendications 1 à 5, dans lequel la durée à la température de cuisson maximale est comprise entre 7 et 25 minutes.

7. Le procédé pour la fabrication du matériau céramique compacté selon l'une quelconque des revendications 1 à 6, dans lequel la température à l'étape de recuisson est de 750°C.

8. Le procédé pour la fabrication du matériau selon l'une quelconque des revendications 1 à 7, dans lequel le matériau céramique compacté a des dimensions de côté comprises entre 3 x 1 m² et 4 x 2 m².

9. Le procédé pour la fabrication du matériau céramique compacté selon l'une quelconque des revendications 1 à 8, dans lequel le matériau céramique compacté a une épaisseur d'au moins 0,7 cm.

10. Un matériau céramique compacté susceptible d'être obtenu par le procédé défini dans l'une quelconque des revendications 1 à 9.

11. Utilisation du matériau céramique compacté selon la revendication 10 en tant que matériau de construction.

12. Un matériau de construction comprenant un matériau céramique compacté selon la revendication 10.

13. Utilisation du matériau de construction selon la revendication 12 pour le revêtement de sols, murs ou façades.

14. Utilisation du matériau de construction selon la revendication 12 pour un comptoir de cuisine.

15. Utilisation selon la revendication 14, dans laquelle le comptoir de cuisine a une longueur supérieure à 3 mètres, de préférence comprise entre 3 et 4 mètres.
